# EUROPÄISCHE PATENTSCHRIFT

(11) **EP 4 188 770 B1**
(45) Veröffentlichungstag und Bekanntmachung des Hinweises auf die Patenterteilung: **11.06.2025**
(21) Anmeldenummer: 21749605.8
(22) Anmeldetag: 27.07.2021
(51) Int. Cl.: B61G 7/14, B61G 9/20, B61L 15/00, G01L 5/13

(54) **KUPPLUNGSANORDNUNG MIT ÜBERWACHUNGSSYSTEM SOWIE VERFAHREN ZUM ÜBERWACHEN EINER KUPPLUNGSANORDNUNG**
COUPLING ASSEMBLY COMPRISING A MONITORING SYSTEM AND METHOD FOR MONITORING A COUPLING ASSEMBLY
ENSEMBLE D'ATTELAGE COMPRENANT UN SYSTÈME DE CONTRÔLE ET PROCÉDÉ POUR CONTRÔLER UN ENSEMBLE D'ATTELAGE

(30) Priorität: 28.07.2020 DE 102020119807
(43) Veröffentlichungstag der Anmeldung: 07.06.2023
(73) Patentinhaber: Voith Patent GmbH, 89522 Heidenheim (DE)
(72) Erfinder: HOMANN, Matthias, 38104 Braunschweig (DE)
(74) Vertreter: Voith Patent GmbH - Patentabteilung
(86) Internationale Anmeldenummer: PCT/EP2021/070916
(87) Internationale Veröffentlichungsnummer: WO 2022/023299

(56) Entgegenhaltungen:
- WO-A2-2007/075971
- DE-A1- 102013 206 997
- US-A1- 2003 182 030
- US-A1- 2018 162 423
- US-A1- 2019 178 754

## Beschreibung

Die vorliegende Erfindung betrifft allgemein Kupplungs- oder Gelenkanordnungen für spurgeführte Fahrzeuge, insbesondere Schienenfahrzeuge. Derartige Kupplungs- oder Gelenkanordnungen weisen in der Regel verschiedene Komponenten auf, wie beispielsweise einen Kupplungskopf, Kraftübertragungselemente und Energieverzehrvorrichtungen.

Energieverzehrvorrichtungen werden beispielsweise in der Schienenfahrzeugtechnik insbesondere als Stoßsicherung eingesetzt. In der Regel besteht eine solche Stoßsicherung aus einer Kombination einer Dämpfungseinrichtung (beispielsweise in Gestalt eines Federapparates) und einer Energieverzehreinrichtung. Die Dämpfungseinrichtung dient dazu, die im normalen Fahrbetrieb auftretenden Zug- und Stoßkräfte abzudämpfen, während mit der Energieverzehreinrichtung das Fahrzeug insbesondere bei größeren Auffahrgeschwindigkeiten geschützt wird.

Üblicherweise ist dabei vorgesehen, dass die Dämpfungseinrichtung Zug- und Stoßkräfte bis zu einer definierten Größe aufnimmt und darüberhinausgehende Kräfte in das Fahrzeuguntergestell weiterleitet. Dadurch werden Zug- und Stoßkräfte, welche während des normalen Fahrbetriebs beispielsweise bei einem mehrgliedrigen Schienenfahrzeug zwischen den einzelnen Wagenkästen auftreten, in dieser in der Regel regenerativ ausgebildeten Stoßsicherung absorbiert. Auf diese Weise wird verhindert, dass die während des normalen Fahrbetriebs auftretenden Zug- und Stoßkräfte in das Fahrzeuguntergestell weitergeleitet werden.

Die Dämpfungseinrichtung ist jedoch nicht in der Lage, grundsätzlich zu verhindern, dass Zug- und Stoßkräfte in die Komponenten der Kupplungsanordnung eingeleitet werden. Infolgedessen sind die Komponenten der Kupplungsanordnung im Betrieb einem mehr oder weniger permanenten Verschleiß ausgelegt. Andererseits ist im Betrieb eine maximale Zuverlässigkeit der Kupplungsanordnung unumgänglich. Dies impliziert, dass alle Komponenten der Kupplungsanordnung ordnungsgemäß ausgebildet und funktionsfähig sind.

Aufgrund der kompakten Bauform von üblicherweise eingesetzten Kupplungsanordnungen ist jedoch eine Überprüfung der Funktionsfähigkeit der einzelnen Komponenten der Kupplungsanordnung in der Regel nur im Rahmen einer Inspektion möglich, bei welcher die einzelnen Komponenten in der Kupplungsanordnung entsprechend inspiziert werden. Derartige Inspektionen müssen derzeit regelmäßig durchgeführt werden, um sicherzustellen, dass sämtliche Komponenten der Kupplungsanordnung ordnungsgemäß funktionieren. "Ordnungsgemäß funktionieren" bedeutet in diesem Zusammenhang, dass sich die Eigenschaft und das Verhalten der einzelnen Komponenten der Kupplungsanordnung nicht oder nicht im Wesentlichen im Vergleich zur ursprünglichen Auslegung verändert haben.

In der Regel sind derartige Inspektionen jedoch sehr aufwändig, da eine Sichtprüfung der Komponenten der Kupplungsanordnung häufig nicht möglich ist.

Aus DE 10 2013 206 997 A1 ist ein Überwachungssystem bekannt, welches Erfassungseinrichtungen zum Erfassen zumindest einer den Zustand und die Betriebsweise einer schienenfahrzeuggebundenen Einrichtung wenigstens mittelbar beschreibende Größe aufweist, die einer Kupplung zugeordnet sind. Diese Größen werden dann gespeichert, wodurch das Überwachungssystem bei der Wartung unterstützend mitwirken kann.

Möglichkeiten der Überwachung einzelner Komponenten der Kupplung sind in DE 10 2019 106 961 A1 und US 2018/0364117 A1 beschrieben.

Die Druckschrift DE 10 2019 106 961 A1 offenbart eine, einem Kraftübertragungselement einer Kupplungsanordnung zugeordnete Sensorik zum direkten oder indirektem Ermitteln eines Lastwechsels.

Aus US 2018/0364117 A1 ist ein einer Kupplungsanordnung zugeordnetes System zur Kraftmessung vorbekannt.

US 2018/162423 A1 offenbart ein Verfahren zum Überwachen der Kupplungsanordnung im ungekuppelten Zustand und im gekuppelten Zustand.

WO 2007/075971 A2 offenbart ein Verfahren und ein System zur Bestimmung, ob ein Lokomotive mit einem Wagon gekuppelt ist.

Auf Grundlage dieser Problemstellung liegt der vorliegenden Erfindung die Aufgabe zu Grunde, eine Kupplungsanordnung für spurgeführte Fahrzeuge anzugeben, bei der in einer einfach zu realisierenden Weise sichergestellt werden kann, dass die einzelnen Komponenten der Kupplungsanordnung - auch nach einer längeren Betriebszeit - ordnungsgemäß funktionieren und entsprechend in das Gesamt-Kupplungskonzept des Fahrzeugs eingebunden sind, ohne dass hierzu die einzelnen Komponenten der Kupplungsanordnung individuell und regelmäßig im Rahmen einer klassischen Inspektion zu überprüfen sind.

Diese Aufgabe wird erfindungsgemäß durch den Gegenstand des unabhängigen Patentanspruchs 1 gelöst, wobei vorteilhafte Weiterbildungen der dort angegebenen Kupplungsanordnung in den entsprechenden abhängigen Patentansprüchen angegeben sind.

Demgemäß betrifft die Erfindung insbesondere eine Kupplungsanordnung für spurgeführte Fahrzeuge mit einem Kupplungskopf, welcher zur Änderung seines Kupplungszustands bedarfsweise mit einem Kupplungskopf einer Gegenkupplung kuppel- oder entkuppelbar ist. Der Kupplungsanordnung ist ein Überwachungssystem zugeordnet zur Zustandsüberwachung von Komponenten der Kupplungsanordnung auf Basis von Belastungsdaten von Komponenten der Kupplungsanordnung.

Das Überwachungssystem ist ausgebildet, abhängig sowohl von einem Kupplungszustand der Kupplung als auch von einem Kupplungszustandsübergang der Kupplung unterschiedliche Belastungsdaten und/oder Belastungsdaten unterschiedlicher Komponenten der Kupplungsanordnung aufzunehmen und entsprechend auszuwerten.

Der Erfindung liegt dabei die Erkenntnis zugrunde, dass eine besonders dedizierte Analyse der einzelnen Komponenten der Kupplungsanordnung realisierbar ist, wenn der Zustand der Kupplungsanordnung bzw. der Komponenten der Kupplungsanordnung in Abhängigkeit von dem Kupplungszustand des Kupplungskopfs erfasst wird. Indem unterschiedliche Zustands- bzw. Belastungsdaten der Kupplungsanordnung im gekuppelten Zustand des Kupplungskopfs sowie im ungekuppelten Zustand des Kupplungskopfs erfasst werden, sind potentielle Beschädigungen der einzelnen Komponenten der Kupplungsanordnung erkennbar.

Zusätzlich werden Zustands- und Belastungsdaten der Kupplungsanordnung bei Kupplungszustandsübergängen des Kupplungskopfs erfasst, um außergewöhnliche Kuppelereignisse detektieren zu können.

Mit der erfindungsgemäßen Lösung ist es somit in zuverlässiger Weise möglich, potentielle Abweichungen der Funktionsweisen der einzelnen Komponenten der Kupplungsanordnung zu erkennen und automatisch entsprechend zu reagieren, um beispielsweise der Abweichung entgegenzuwirken.

Die erfindungsgemäße Lösung ermöglicht es, potentielle Fehlfunktionen der einzelnen Komponenten der Kupplungsanordnung, die einen negativen Einfluss auf den Kupplungszustand oder den Kupplungsvorgang haben bzw. haben können, möglichst frühzeitig zu erkennen. Nach Erkennen von potentiellen Fehlfunktionen können beispielsweise automatisch Gegenmaßnahmen initiiert werden, mit welchen eine Abweichung möglichst frühzeitig kompensiert werden kann.

Insbesondere ist im Rahmen der vorliegenden Erfindung vorgesehen, dass das Überwachungssystem eine Sensorik aufweist, welche ausgebildet ist, im ungekuppelten Zustand des Kupplungskopfs:
i) mit Hilfe mindestens einer Schwingungsmessung insbesondere über eine vorab festgelegte oder festlegbare Zeitperiode ein Schwingungsspektrum mindestens einer Komponente der Kupplungsanordnung als Beschleunigungszeitsignal aufzunehmen; und/oder
ii) mit Hilfe mindestens einer Körperschallmessung insbesondere über eine vorab festgelegte oder festlegbare Zeitperiode ein Körperschallspektrum mindestens einer Komponente der Kupplungsanordnung als Amplituden-Frequenzgang aufzunehmen.

Dabei liegt der Erfindung die Erkenntnis zugrunde, dass in einem Fall, wenn beispielsweise aufgrund eines Lagerschadens oder aufgrund einer nicht hinreichenden Befestigung sich das charakteristische Schwingungsspektrum der Kupplungsanordnung im ungekuppelten Zustand des Kupplungskopfs ändert und von einem idealen Schwingungsspektrum (Soll-Schwingungsspektrum) abweicht, dies dann mit Hilfe der Sensorik entsprechend erfasst werden kann.

Der Grad der Änderung bzw. der Grad der Abweichung von dem Soll-Schwingungsspektrum kann dann als Indiz für eine Fehlfunktion von Komponenten der Kupplungsanordnung dienen.

Alternativ oder zusätzlich zu mindestens einer Schwingungsmessung wird im ungekuppelten Zustand des Kupplungskopfs mindestens eine Körperschallmessung vorgenommen, um ein entsprechendes Körperschallspektrum mindestens einer Komponente der Kupplungsanordnung als Amplituden-Frequenzgang aufzunehmen.

Hierbei wird die physikalische Grundlage ausgenutzt, wonach ein Festkörper neben Normalspannungen auch Schubspannungen aufnehmen kann. Deshalb können sich in Festkörpern zwei verschiedene Arten Körperschallwellen ausbreiten, nämlich Longitudinalwellen und Transversalwellen, die sich unabhängig voneinander ausbreiten. Die jeweiligen Schallgeschwindigkeiten werden insbesondere von dem Elastizitätsmodul bei Longitudinalwellen und dem Schubmodul bei Transversalwellen beeinflusst.

Durch das Aufnehmen eines Körperschallspektrums im ungekuppelten Zustand des Kupplungskopfs und durch Vergleich des aufgenommenen Körperschallspektrums mit einem idealen Körperschallspektrum (Soll-Körperschallspektrum) sind somit Materialabweichungen in den Komponenten der Kupplungsanordnung erfassbar.

Auf diese Weise sind beispielsweise Fehlfunktionen der Kupplungsanordnung bzw. von Komponenten der Kupplungsanordnung detektierbar, insbesondere ein Lagerschaden, eine lose Befestigung bzw. eine lose Verbindung, ein zumindest teilweise angesprochenes destruktives Energieverzehrglied (Verformungsrohr), aber auch Beschädigungen von Anbauteilen, wie beispielsweise eine defekte Mittenstellung des Kupplungskopfs.

In einer Weiterbildung der zuletzt genannten Ausführungsformen der erfindungsgemäßen Kupplungsanordnung ist vorgesehen, dass das Überwachungssystem eine Auswerteeinrichtung aufweist, welche ausgebildet ist, kupplungsspezifische Lastfaktoren anhand der mit der Sensorik im ungekuppelten Zustand des Kupplungskopfs aufgenommenen Daten- und/oder Informationen abzuleiten.

Hierzu ist die Auswerteeinrichtung insbesondere ausgebildet, zum Analysieren des aufgenommenen Schwingungsspektrums aus dem aufgenommenen Schwingungsspektrum wenigstens ein Schwingungsmuster und/oder wenigstens eine Schwingungsamplitude zu extrahieren und das mindestens eine extrahierte Schwingungsmuster mit mindestens einem Bezugsmuster zu vergleichen und/oder die mindestens eine extrahierte Schwingungsamplitude mit mindestens einem Bezugswert zu vergleichen.

Alternativ oder zusätzlich hierzu ist die Auswerteeinrichtung ferner insbesondere ausgebildet, zum Analysieren des aufgenommenen Amplituden-Frequenzgangs aus dem aufgenommenen Amplituden-Frequenzgang wenigstens eine Schwingungsfrequenz und/oder wenigstens eine Amplitude zu extrahieren und die mindestens eine extrahierte Schwingungsfrequenz mit mindestens einer Bezugsfrequenz zu vergleichen und/oder die mindestens eine extrahierte Amplitude mit mindestens einem Bezugswert zu vergleichen.

Insbesondere ist in diesem Zusammenhang vorgesehen, dass bei Inbetriebnahme, insbesondere bei einer erstmaligen Inbetriebnahme der Kupplungsanordnung, in einem Lernmodus mindestens ein charakteristisches Schwingungsprofil und/oder mindestens ein charakteristisches Körperschallprofil der Kupplungsanordnung bei ungekuppeltem Kupplungskopf aufgenommen werden/wird, wobei anhand des im Lernmodus aufgenommenen Schwingungs- und/oder Körperschallprofils entsprechende Alarmschwellen festgelegt werden.

Um im gekuppelten Zustand des Kupplungskopfs entsprechende Zustands- bzw. Lastdaten der Kupplungsanordnung erfassen zu können, ist gemäß Weiterbildungen der erfindungsgemäßen Kupplungsanordnung vorgesehen, dass das Überwachungssystem eine Sensorik aufweist, welche ausgebildet ist, im gekuppelten Zustand des Kupplungskopfs:
i) mit Hilfe mindestens einer Schwingungsmessung insbesondere über eine vorab festgelegte oder festlegbare Zeitperiode ein Schwingungsspektrum mindestens einer Komponente der Kupplungsanordnung als Beschleunigungszeitsignal aufzunehmen; und/oder
ii) mit Hilfe mindestens einer Körperschallmessung insbesondere über eine vorab festgelegte oder festlegbare Zeitperiode ein Körperschallspektrum mindestens einer Komponente der Kupplungsanordnung als Amplituden-Frequenzgang aufzunehmen; und/oder
iii) mit Hilfe mindestens einer Beschleunigungsmessung insbesondere über eine vorab festgelegte oder festlegbare Zeitperiode ein Akzelerogramm mindestens einer Komponente der Kupplungsanordnung aufzunehmen.

Um anhand der mit der Sensorik im gekuppelten Zustand des Kupplungskopfs aufgenommenen Daten und/oder Informationen entsprechende kupplungsspezifische Lastfaktoren ableiten zu können, kommt vorzugsweise eine Auswerteeinrichtung zum Einsatz, die insbesondere ausgebildet ist, zum Analysieren des aufgenommenen Schwingungsspektrums aus dem aufgenommenen Schwingungsspektrum wenigstens ein Schwingungsmuster und/oder wenigstens eine Schwingungsamplitude zu extrahieren und das mindestens eine extrahierte Schwingungsmuster mit mindestens einem Bezugsmuster zu vergleichen und/oder die mindestens eine extrahierte Schwingungsamplitude mit mindestens einem Bezugswert zu vergleichen.

Alternativ oder zusätzlich hierzu ist die Auswerteeinrichtung insbesondere ausgebildet, zum Analysieren des aufgenommenen Amplituden-Frequenzgangs aus dem aufgenommenen Amplituden-Frequenzgang wenigstens eine Schwingungsfrequenz und/oder wenigstens eine Amplitude zu extrahieren und die mindestens eine extrahierte Schwingungsfrequenz mit mindestens einer Bezugsfrequenz zu vergleichen und/oder die mindestens eine extrahierte Amplitude mit mindestens einem Bezugswert zu vergleichen.

Zusätzlich sollte die Auswerteeinrichtung ausgebildet sein, zum Analysieren des aufgenommen Akzelerogramms einen Lastwechsel abzuleiten und mit einem Bezugswert zu vergleichen.

Bei dieser zuletzt genannten Ausführungsvariante der erfindungsgemäßen Kupplungsanordnung ist insbesondere vorgesehen, dass bei Inbetriebnahme, insbesondere bei einer erstmaligen Inbetriebnahme der Kupplungsanordnung, in einem Lernmodus mindestens ein charakteristisches Schwingungsprofil und/oder mindestens ein charakteristisches Körperschallprofil der Kupplungsanordnung bei gekuppeltem Kupplungskopf aufgenommen werden/wird, wobei anhand des im Lernmodus aufgenommenen Schwingungs- und/oder Körperschallprofils entsprechende Alarmschwellen festgelegt werden.

Wie bereits eingangs angedeutet, zeichnet sich die erfindungsgemäße Lösung insbesondere auch dadurch aus, dass entsprechende Zustands- bzw. Lastdaten von Komponenten der Kupplungsanordnung auch bei einem Kupplungszustandsübergang des Kupplungskopfs erfasst werden.

Zu diesem Zweck ist gemäß Realisierungen der erfindungsgemäßen Kupplungsanordnung vorgesehen, dass das Überwachungssystem eine Sensorik aufweist, welche ausgebildet ist, beim Übergang des Kupplungskopfs von seinem ungekuppelten Zustand in seinen gekuppelten Zustand:
i) mit Hilfe mindestens einer Abstands- und/oder Näherungsmessung insbesondere über eine vorab festgelegte oder festlegbare Zeitperiode einen zeitlichen Verlauf des Kupplungsvorgangs aufzunehmen; und/oder
ii) mit Hilfe mindestens einer Beschleunigungsmessung insbesondere über eine vorab festgelegte oder festlegbare Zeitperiode zumindest einen Teil der beim Kupplungsvorgang in die Kupplungsanordnung eingeleiteten Kräfte aufzunehmen.

Bei dieser Weiterbildung der erfindungsgemäßen Kupplungsanordnung dient das Überwachungssystem somit insbesondere dazu, zu erfassen, ob beim Kupplungsvorgang zu hohe Belastungen auf die einzelnen Komponenten der Kupplungsanordnung eingewirkt haben. Darüber hinaus ist das System in der Lage, zu detektieren, ob alle für den Kupplungsvorgang relevanten Komponenten der Kupplungsanordnung ordnungsgemäß funktionieren.

Um noch genauer einen Zustand der Kupplungsanordnung und insbesondere einen Zustand der einzelnen Komponenten der Kupplungsanordnung bestimmen bzw. vorhersagen zu können, ist gemäß Weiterbildungen der erfindungsgemäßen Kupplungsanordnung vorgesehen, dass das Überwachungssystem eine Sensorik aufweist, welche ausgebildet ist, beim Übergang des Kupplungskopfs von seinem gekuppelten Zustand in seinen ungekuppelten Zustand mithilfe mindestens einer Schwingungs- und/oder Körperschallmessung insbesondere über eine vorab festgelegte oder festlegbare Zeitperiode einen Übergang von Komponenten der Kupplungsanordnung in ihren ungekuppelten Zustand zu erfassen. Auf diese Weise wird somit ermittelt, dass der Entkupplungsvorgang ordnungsgemäß stattgefunden hat.

Alternativ oder zusätzlich hierzu sollte vorzugsweise die Sensorik ausgebildet sein, über eine vorab festgelegte oder festlegbare Zeitperiode die Zeitdauer aufzunehmen, während welcher der Kupplungskopf in seinem gekuppelten Zustand vorliegt, um so einen Lastwechsel im gekuppelten Zustand ableiten zu können. Alternativ oder zusätzlich hierzu sollte die Sensorik ausgebildet sein, über eine vorab festgelegte oder festlegbare Zeitperiode die Zeitdauer aufzunehmen, während welcher der Kupplungskopf in seinem ungekuppelten Zustand vorliegt.

Eine weitere Betriebsgröße stellen die äußeren Umwelteinflüsse, insbesondere die Feuchtigkeit und Temperatur, dar, die einen Einfluss auf den Zustand der Komponenten der Kupplungsanordnung haben können. Zu diesem Zweck ist gemäß Weiterbildungen der erfindungsgemäßen Lösung vorgesehen, dass das Überwachungssystem eine Sensorik aufweist, welche ausgebildet ist, über eine vorab festgelegte oder festlegbare Zeitperiode äußere Umwelteinflüsse aufzunehmen, denen die Kupplungsanordnung ausgesetzt ist.

Mit der erfindungsgemäßen Lösung ist es somit möglich, direkt oder indirekt einen Lastwechsel, dem die Kupplungsanordnung unterzogen ist, und einen Zustand der einzelnen Komponenten der Kupplungsanordnung zu ermitteln oder abzuschätzen. Bei dem Lastwechsel, dem die Kupplungsanordnung unterzogen ist, handelt es sich insbesondere um eine auf die Komponenten der Kupplungsanordnung wirkende mechanische Spannung.

Dem Überwachungssystem oder der Sensorik ist vorzugsweise eine Speichereinrichtung zugeordnet zum Speichern von insbesondere im Hinblick auf den Betrieb der Kupplungsanordnung relevanten Informationen und Daten, wobei die Speichereinrichtung insbesondere ausgebildet ist, vorzugsweise alle mit der Sensorik erfassten Daten und Informationen dauerhaft zu speichern, wobei die Speichereinrichtung vorzugsweise über einen Fernzugriff zumindest teilweise auslesbar ist.

Die Speichereinrichtung ist dabei vorzugsweise ausgebildet, insbesondere über einen vorab festgelegten oder festlegbaren Zeitraum auftretende Belastungen von Komponenten der Kupplungsanordnung zu dokumentieren und/oder insbesondere über einen vorab festgelegten oder festlegbaren Zeitraum auftretende Ereignisse insbesondere von Komponenten der Kupplungsanordnung zu dokumentieren.

Dem Überwachungssystem ist vorzugsweise eine Auswerteeinrichtung zugeordnet, um einen Verschleißgrad, einen Gesamt-Lastwechsel und/oder einer Gesamt-Belastung von Komponenten der Kupplungsanordnung zu ermitteln, und zwar auf Grundlage der dokumentierten Belastungen und auf Grundlage der dokumentierten Ereignisse. Vorzugsweise wird eine eine Wartung und/oder einen Austausch einer Komponente betreffende Information in Abhängigkeit von dem ermittelten Verschleißgrad, dem ermittelten Gesamt-Lastwechsel und/oder der ermittelten Gesamt-Belastung ausgegeben.

Insbesondere sind somit wirksam etwaige Abnutzungen oder Vorschädigungen von Komponenten der Kupplungsanordnung erfassbar, wie beispielsweise eine Abnutzung der regenerativ ausgebildeten Energieverzehrelemente (Elastomerlager). Dies ist insbesondere deshalb von Vorteil, da die einzelnen Komponenten einer Kupplungsanordnung in der Regel nicht frei zugänglich sind und somit eine Überprüfung durch Sichtprüfung sehr aufwändig wäre.

Darüber hinaus kann mit der erfindungsgemäßen Lösung frühzeitig und zuverlässig eine Vorschädigung von Komponenten der Kupplungsanordnung erkannt und signalisiert werden, um dadurch mögliche Folgeschäden und damit verbundene Ausfälle des Gesamtsystems durch nicht-planmäßige Instandhaltungsmaßnahmen zu vermeiden.

Durch die erfindungsgemäße Lösung ist eine freie Zugänglichkeit der zu überwachenden Bauteile einer Kupplungsanordnung nicht mehr notwendig. Zudem kann eine On-Board-Diagnose realisiert werden, um dem Fahrzeugsystem eine frühzeitige Diagnose zu ermöglichen und die Wartung zu vereinfachen. Bei einer solchen On-Board-Diagnose erfolgt vom Fahrzeugsystem eine automatische Abfrage der Sensorik oder einer der Sensorik zugeordneten Auswerteeinrichtung.

Gemäß bevorzugten Realisierungen der erfindungsgemäßen Kupplungsanordnung weist die Sensorik mindestens einen Dehnungssensor auf, um bedarfsweise dehnende und/oder stauchende Verformungen beispielsweise von zumindest einem Bereich eines Kraftübertragungselementes oder zumindest einem Teil des Kraftübertragungselementes zu erfassen.

Der mindestens eine Dehnungssensor kann beispielsweise als Dehnungsmessstreifen oder Dehnungsaufnehmer ausgestaltet sein. Derartige Dehnungsmessstreifen oder Dehnungsaufnehmer lassen sich besonders einfach an bestehende Strukturen befestigen, beispielsweise anschrauben, ohne dass in struktureller Hinsicht das Kraftübertragungselement oder andere Komponenten der Kupplungsanordnung verändert werden müssen. Insbesondere beeinflussen derartige Dehnungssensoren nicht die Steifigkeit des Kraftübertragungselementes, so dass die dynamischen Eigenschaften des Kraftübertragungselementes und insbesondere der Kupplungsanordnung unangetastet bleiben.

Um eine höhere Genauigkeit beim Ermitteln oder Abschätzen eines Lastwechsels, dem die Komponenten der Kupplungsanordnung unterzogen ist, erzielen zu können, wird gemäß Weiterbildungen der erfindungsgemäßen Lösung vorgeschlagen, dass die Sensorik mindestens einen Kraftaufnehmer und/oder mindestens einen Drehmomentaufnehmer vorzugsweise mit mindestens einem Dehnungssensor aufweist, um eine in die Kupplungsanordnung eingeleitete Kraft und/oder ein in die Kupplungsanordnung eingeleitetes Drehmoment zu erfassen.

Im Vergleich zu Dehnungssensoren benötigt jedoch ein Kraftaufnehmer bzw. ein Drehmomentaufnehmer einen größeren Bauraum. Des Weiteren ist eine Kalibrierung (Einmessung) nach der Montage erforderlich. "Kalibrierung" bedeutet in diesem Zusammenhang, dass die Prozesskraft zunächst mit Hilfe einer Kraftmessdose gemessen werden muss, um diese dann mit dem Signal des Kraftaufnehmers bzw. Drehmomentaufnehmers zu vergleichen und dieses Signal in eine Kraft umzurechnen.

Gemäß bevorzugten Realisierungen ist vorgesehen, dass der mindestens eine Dehnungssensor ein aktiver Dehnungssensor mit integrierter Verstärkerelektronik ist.

Insbesondere ist es in diesem Zusammenhang denkbar, dass der Dehnungssensor als Dehnungsmessstreifen (DMS) ausgebildet ist, welcher seinen elektrischen Widerstand bereits bei geringen Verformungen ändert. Ein derartiger Dehnungsmessstreifen kann als Kernstück eines Kraftaufnehmers, Druckaufnehmers oder Drehmomentaufnehmers dienen. Bei Messungen mit Dehnungsmessstreifen werden vor allem Brückenschaltungen eingesetzt, hierzu zählen die Viertel-, Halb- und die Vollbrücke.

Da die Widerstandsänderung von Dehnungsmessstreifen relativ klein ist, sollte diese durch geeignete Verfahren ausgewertet werden. Dabei kann auf den Dehnungsmessstreifen bzw. auf die Dehnungsmessstreifen-Brücke ein Anregungssignal gegeben werden, welches je nach Anwendung von unterschiedlicher Art ist. Es wird dann die Systemantwort des bzw. der Dehnungsmessstreifen verstärkt oder direkt ausgewertet.

Selbstverständlich ist die Erfindung aber nicht auf eine Sensorik beschränkt, bei welcher mindestens ein Dehnungssensor zum Einsatz kommt, dessen elektrischer Widerstand sich mit der Dehnung ändert. Vielmehr ist es grundsätzlich auch denkbar, wenn kapazitive oder induktive Sensoren zum Einsatz kommen, um eine Verformung eines Bereiches der Kupplungsanordnung zu erfassen.

Unabhängig davon, welche Art von Dehnungssensor zum Einsatz kommt, ist es von Vorteil, wenn der Nutzmessbereich des Sensors optimal auf die entsprechende Anwendung einjustiert und die Wirkrichtung des Strom- oder Spannungssignals des Sensors applikationsspezifisch gewählt wird. Dies ist beispielsweise dadurch realisierbar, dass Sensoren mit einem entsprechenden Teach-In-Eingang verwendet werden, wobei über diesen Teach-In-Eingang der Nutzmessbereich optimal einjustiert werden kann. Selbstverständlich bieten sich hier aber auch andere Ausführungsformen grundsätzlich an.

Gemäß einem weiteren Aspekt der vorliegenden Erfindung ist vorgesehen, dass die Sensorik mindestens einen Beschleunigungssensor aufweist, welcher ausgebildet ist, um ein insbesondere charakteristisches Schwingungsspektrum der Kupplungsanordnung oder Komponenten hiervon zu erfassen. Der Beschleunigungssensor kann beispielsweise direkt an dem Kraftübertragungselement der Kupplungsanordnung oder an dem Kupplungskopf der Kupplungsanordnung angeordnet sein.

In vorteilhafter Weise weist die Sensorik zusätzlich zu dem mindestens einen Beschleunigungssensor mindestens ein Schwingungserzeuger, beispielsweise ein Ultraschall-Schwingungserzeuger, auf, um eine (Eigen-) Schwingung in der Komponente der Kupplungsanordnung bedarfsweise zu induzieren.

Auf diese Weise ist eine Schwingungsanalyse zur Beurteilung der Funktionsfähigkeit der Kupplungsanordnung umsetzbar. Insbesondere ist mit der Schwingungsanalyse eine potentielle Beschädigung oder ein potentieller ungünstiger Betriebszustand der Kupplungsanordnung oder einer Komponente hiervon in einer leicht zu realisierenden aber dennoch effektiven Weise aufdeckbar. Dadurch ist neben einer reaktionsschnellen Planung und Durchführung einer Instandsetzungsmaßnahme die frühzeitige Erkennung einer beginnenden Bauteilschädigung möglich.

Insbesondere ist mit dem mindestens einen Beschleunigungssensor eine Körperschall- und Schwingungsmessung unter Verwendung von Spektral- und Korrelationsanalysen möglich, um Beschädigungen einer Komponente der Kupplungsanordnung oder unzulässige Betriebszustände bereits im Frühstadium zu erkennen, was ein gezieltes Eingreifen oder das Einleiten von zustandsorientierten Maßnahmen erlaubt.

Es ist somit möglich, die Funktionsweise der Kupplungsanordnung zu überwachen, wobei mit Hilfe mindestens einer Schwingungsmessung über eine vorab festgelegte oder festlegbare Zeitperiode ein (charakteristisches) Schwingungsspektrum des Kraftübertragungselementes als Beschleunigungszeitsignal aufgenommen und das aufgenommene Schwingungsspektrum analysiert wird.

Dabei ist es denkbar, dass die mindestens eine Schwingungsmessung über eine Zeitperiode durchgeführt wird, in welcher die Kupplungsanordnung, zu welcher das überwachte Kraftübertragungselement gehört, mit einer zweiten Kupplungsanordnung gekuppelt wird, so dass das aufgenommene Schwingungsspektrum ein für den Betätigungs- und insbesondere Kuppelvorgang der Kupplungsanordnung charakteristisches Spektrum ist.

Alternativ oder zusätzlich ist es in diesem Zusammenhang aber auch denkbar, dass die mindestens eine Schwingungsmessung über eine Zeitperiode durchgeführt wird, in welcher die Kupplungsanordnung, zu welcher das Kraftübertragungselement gehört, vorzugsweise in einem ungekuppelten Zustand vorliegt, wobei gleichzeitig mit Hilfe eines Schwingungserzeugers eine Schwingung in dem Kraftübertragungselement induziert wird.

Zum Analysieren des aufgenommenen Schwingungsspektrums werden/wird gemäß bevorzugten Ausführungsformen der vorliegenden Erfindung aus dem aufgenommenen Schwingungsspektrum wenigstens ein Schwingungsmuster und/oder wenigstens eine Schwingungsamplitude extrahiert, wobei das mindestens eine extrahierte Schwingungsmuster mit dem mindestens einem Bezugsmuster vergleichen wird und/oder wobei die mindestens eine Schwingungsamplitude mit dem mindestens einem Bezugswert verglichen wird.

Dabei liegt der Erfindung die Erkenntnis zu Grunde, dass sich beispielsweise durch mechanischen Verschleiß zum Beispiel des Kraftübertragungselementes oder Komponenten der Kupplungsanordnung das charakteristische Schwingungsspektrum ändert und von einem idealen Schwingungsspektrum (Soll-Schwingungsspektrum) abweicht.

Der Grad bzw. das Ausmaß der Änderung bzw. der Abweichung von dem Soll-Schwingungsspektrum kann dann als Indiz für eine fehlerhafte Funktionsweise des Kraftübertragungselementes bzw. für einen Verschleiß des Kraftübertragungselementes dienen.

Potentielle Abweichungen der Funktionsweise der überwachten Komponente der Kupplungsanordnung bzw. ein potentieller Verschleiß der Kupplungsanordnung oder Komponenten hiervon werden somit durch einen Beschleunigungssensor, der beispielsweise an dem Kraftübertragungselement angeordnet oder in dem Kraftübertragungselement initiiert ist, detektiert und Abweichungen werden entweder über Fehlermeldungen an den Betreiber des spurgeführten Fahrzeuges oder über eine Remote-Control-Schnittstelle an einen zuständigen Wartungsservice, insbesondere Fernwartungsservice, übermittelt.

Die Fernwartung (Remote Maintenance) von Komponenten eines spurgeführten Fahrzeuges gewinnt beim Support der Hard- und Software von Zulieferern in der Schienenfahrzeugtechnik zunehmend an Bedeutung. Durch die immer stärkere Vernetzung der Steuersysteme über das Internet, dem Aufbau von firmeninternen Intranets und herkömmliche Telekommunikationswege (ISDN, Telefon) erweitern sich die Möglichkeiten der direkten Unterstützung im Support. Nicht zuletzt wegen der Einsparungsmöglichkeiten bei Reisekosten und die bessere Ressourcennutzung (Personal und Technik) werden Produkte der Fernwartung zur Kostensenkung in Unternehmen genutzt. Fernwartungsprogramme ermöglichen es dem entfernt sitzenden Servicetechniker, direkt auf die überwachte Kupplungsanordnung bzw. Komponenten hiervon zuzugreifen und deren Status abzufragen, um vorrausschauende Gegenmaßnahmen, wie beispielsweise Wartungsintervalle, einzuplanen und durchzuführen.

Gemäß Ausführungsformen der vorliegenden Erfindung ist der Sensorik eine Speichereinrichtung zugeordnet zum Speichern von insbesondere im Hinblick auf den Betrieb der Komponenten der Kupplungsanordnung bzw. im Hinblick auf den Betrieb der Kupplungsanordnung, zu der das überwachte Komponente gehört, relevanten Informationen und Daten, wobei die Speichereinrichtung insbesondere ausgebildet ist, vorzugsweise alle mit der Sensorik erfassten Daten und Informationen dauerhaft zu speichern, und wobei die Speichereinrichtung ausgebildet ist, vorzugsweise über einen Fernzugriff zumindest teilweise auslesbar zu sein.

Indem im Hinblick auf den Betrieb der überwachten Komponente der Kupplungsanordnung bzw. im Hinblick auf den Betrieb der Kupplungsanordnung, zu welcher die überwachte Komponente gehört, relevante Informationen und Daten gespeichert werden, kann der entsprechende Betrieb dokumentiert werden, um insbesondere auch Wartungsintervalle vorhersagend einplanen zu können.

Insbesondere ist gemäß Ausführungsformen der erfindungsgemäßen Lösung vorgesehen, dass der Sensorik eine Speichereinrichtung zugeordnet ist zum Dokumentieren von über einen vorab festgelegten oder festlegbaren Zeitraum bei einer Kraftübertragung auftretenden Belastungen des Kraftübertragungselementes zu dokumentieren. Es bietet sich in diesem Zusammenhang an, dass eine Auswerteeinrichtung vorgesehen ist, um einen Gesamt-Lastwechsel und/oder eine Gesamt-Belastung der Kupplungsanordnung zu ermitteln, und zwar auf Grundlage der dokumentierten Belastungen.

In diesem Fall sollte die Auswerteeinrichtung ferner ausgebildet sein, eine eine Wartung und/oder einen Austausch einer Komponente der Kupplungsanordnung betreffende Information in Abhängigkeit von dem ermittelten Gesamt-Lastwechsel und/oder der ermittelten Gesamt-Belastung auszugeben.

Hierbei liegt der Erfindung die Erkenntnis zu Grunde, dass Komponenten der Kupplungsanordnung, wie beispielsweise regenerativ ausgebildete Energieverzehrelemente, ausgetauscht oder gewartet werden müssen, wenn sich die ertragbaren Belastungen bis zu einem fest definierten Wert aufsummiert haben. Bislang erfolgt eine Überprüfung oder Wartung über eine Dokumentation der jährlichen Lastwechsel, was auf einer Schätzung basiert. Daran liegt eine große Ungenauigkeit, da tatsächlich nicht genau bekannt ist, wie viele Lastwechsel wirklich stattgefunden haben und wie hoch dabei die Beanspruchung war.

Mit der vorliegenden Erfindung wird vorzugsweise das Lastkollektiv mitgeschrieben, was einen größeren Ausnutzungsgrad der Komponenten der Kupplungsanordnung ermöglicht. Dadurch kann insbesondere die Lebensdauer der Komponenten der Kupplungsanordnung erhöht werden.

Ferner ist es möglich, dass schon vorher erkannt wird, wann und welche Komponenten der Kupplungsanordnung ausgetauscht werden müssen. Dadurch kann ein entsprechender Ersatz vorab beschafft werden und die Ausfallzeiten werden minimiert und die Prozesssicherheit deutlich erhöht.

Die Erfindung betrifft ferner eine Verfahren zum Überwachen der Funktionsweise einer Kupplungsanordnung eines spurgeführten Fahrzeugs, wobei die Kupplungsanordnung einen Kupplungskopf aufweist. Zum Überwachen der Funktionsfähigkeit der Kupplungsanordnung wird im ungekuppelten Zustand des Kupplungskopfs mindestens ein Schwingungs- und/oder Körperschallspektrum der Kupplungsanordnung aufgenommen. Des Weiteren wird im gekuppelten Zustand des Kupplungskopfs mindestens ein Schwingungs- und/oder Körperschallspektrum und vorzugsweise mindestens ein Akzelerogramm der Kupplungsanordnung aufgenommen. Beim Übergang des Kupplungskopfs von seinem ungekuppelten Zustand in seinen gekuppelten Zustand werden der zeitliche Verlauf des Kupplungsvorgangs und der Lastwechsel aufgenommen.

Nachfolgend wird unter Bezugnahme auf die beiliegenden Zeichnungen eine exemplarische Ausführungsform der vorliegenden Erfindung näher beschrieben. Es zeigen:
- FIG. 1: schematisch und in einer isometrischen Ansicht eine Ausführungsform einer Kupplungsanlenkung für eine Mittelpufferkupplung eines spurgeführten Fahrzeuges, insbesondere Schienenfahrzeuges; und
- FIG. 2: die Kupplungsanlenkung gemäß FIG. 1 in einer Seitenschnittansicht.

Derzeit wird an automatischen Kupplungen in der Regel nur ein Kuppelzustand überwacht. Dies geschieht gewöhnlich über Näherungsschalter. Auf dieses Weise kann dem Betreiber angezeigt werden, ob die automatische Kupplung gekuppelt ist oder nicht.

Die Fahrzeugsteuerung kann die Information über den Kupplungszustand ggf. speichern und so die Anzahl von Kuppelvorgängen und die zurückgelegte Strecke im gekuppelten Zustand ermitteln. Jedoch steht in der Regel diese Information nicht in der benötigten Güte zur Verfügung. Dadurch ist mit den bekannten Systemen ein sinnvolles "Condition-Monitoring" bzw. ein "Preventive Maintenance" nicht möglich.

Zu diesem Zweck ist das Überwachungssystem vorgesehen, mit welchem die relevanten Daten einer automatischen Kupplung oder beispielsweise einer Kurzkupplung erfasst werden. Dadurch wird der aktuelle Zustand abgeleitet, um bereits vor Ausfall geeignete Maßnahmen zum Verhindern eines Ausfalls durchführen zu können. Dadurch wird ein ungeplanter Stillstand des Fahrzeugs vermieden, was zu einer Verringerung der Betriebskosten und einer Vermeidung von ungeplanten Stillständen führt.

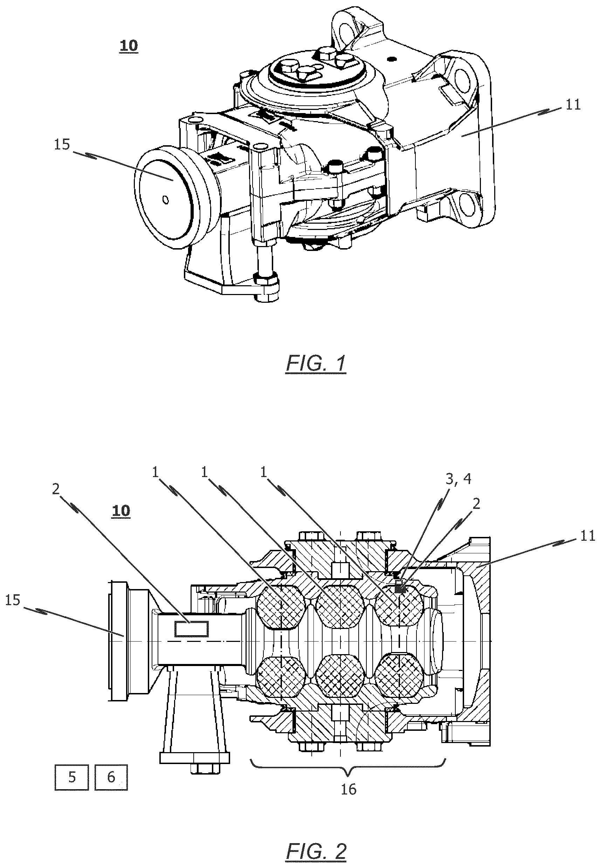

In FIG. 1 ist schematisch und in einer isometrischen Ansicht eine Kupplungsanlenkung 10 einer Mittelpufferkupplung für Schienenfahrzeuge gezeigt, wobei in diese Kupplungsanlenkung 10 Teil einer Kupplungsanordnung ist. Die Darstellung in FIG. 2 zeigt die Kupplungsanlenkung 10 gemäß FIG. 1 in einer Seitenschnittansicht.

In der dargestellten Kupplungsanlenkung 10 ist eine Energieabsorptionsvorrichtung integriert, welche insgesamt drei Federeinrichtungen mit jeweils einem ringförmigen Elastomerkörper 1 aufweist. Diese ringförmigen Elastomerkörper 1 der Federeinrichtungen sind derart ausgelegt, dass Zug- und Stoßkräfte bis zu einer definierten Größe aufgenommen und darüberhinausgehende Kräfte über den Lagerbock 11 in das Fahrzeuguntergestell weitergeleitet werden.

Die in FIG. 1 und FIG. 2 dargestellte Kupplungsanlenkung 10 umfasst den hinteren Teil einer Kupplungsanordnung und dient dazu, den Kupplungsschaft (Kraftübertragungselement 15) einer Mittelpufferkupplung über den Lagerbock 11 an einer (in den Zeichnungen nicht dargestellten) Anschraubplatte eines Wagenkastens horizontal schwenkbar anzulenken.

Da bei der in FIG. 1 und FIG. 2 dargestellten Kupplungsanlenkung 10 die als Dämpfungseinrichtung dienende regenerative Energieabsorptionsvorrichtung mit den ringförmigen Elastomerkörpern 1 innerhalb des Lagerbockes 11 aufgenommen ist, weist der Lagerbock 11 eine im Hinblick auf die ringförmigen Elastomerkörper 1 angepasste Konfiguration auf. Im Einzelnen weist der Lagerbock 11 eine Käfig- bzw. Gehäusestruktur 16 auf, mit welcher die Lagerschalen des Lagers mit einem vertikal verlaufenden Flansch verbunden sind.

Im Betrieb der Kupplungsanlenkung 10 werden über den Kupplungsschaft 15 Zug- oder Druckkräfte in die Energieabsorptionsvorrichtung eingeleitet. Im Einzelnen bewegt sich bei Einleiten von Zug- oder Druckkräften der Kupplungsschaft 15 relativ zu der Käfig- bzw. Gehäusestruktur 16 des Lagerbockes 11, wobei dabei die Elastomerkörper 1 der Energieabsorptionsvorrichtung entsprechend deformiert werden, um die übertragenen Zug- oder Druckkräfte abzudämpfen.

Die Kupplungsanordnung kann zusätzlich zu der Energieabsorptionsvorrichtung eine Energieverzehreinrichtung mit einem destruktiv ausgebildeten Energieverzehrelement aufweisen. Die Energieverzehreinrichtung dient dazu, nach Überschreiten einer vorab festgelegten kritischen Stoßkraft anzusprechen und durch plastische Verformung des Energieverzehrelementes zumindest einen Teil der über die Energieverzehrvorrichtung übertragenen Stoßkräfte in Wärme und Verformungsarbeit umzuwandeln und somit zu "verzehren".

Das Energieverzehrelement kann insbesondere als Verformungsrohr ausgebildet sein.

Wie in FIG. 2 schematisch angedeutet, ist bei der exemplarischen Ausführungsform das Kraftübertragungselement 15 mit einer entsprechenden Sensorik 2 versehen, um direkt oder indirekt einen Lastwechsel, dem das Kraftübertragungselement 15 unterzogen ist, ermitteln oder abschätzen zu können. Insbesondere soll mit Hilfe der Sensorik 2 eine auf das Kraftübertragungselement 15 wirkende Spannung ermittelt oder abgeschätzt werden.

Die Sensorik 2 weist mindestens einen Dehnungssensor auf, welcher ausgebildet ist, dehnende und/oder stauchende Verformungen von zumindest einem Bereich oder zumindest einem Teil des Kraftübertragungselementes 15 zu erfassen.

Der Sensorik 2 ist eine in FIG. 1 schematisch angedeutete Speichereinrichtung 5 zugeordnet, um Informationen und Daten zu speichern, welche im Hinblick auf den Betrieb bzw. in Hinblick auf den Einsatz des Kraftübertragungselementes 15 relevant sind.

Die Speichereinrichtung 5 ist insbesondere ausgebildet, vorzugsweise alle mit der Sensorik 2 erfassten Daten und Informationen dauerhaft zu speichern. Ferner sollte die Speichereinrichtung 5 ausgebildet sein, vorzugsweise über einen Fernzugriff zumindest teilweise auslesbar zu sein.

Insbesondere dient die der Sensorik 2 zugeordnete Speichereinrichtung 5 zum Dokumentieren von über einen vorab festgelegten oder festlegbaren Zeitraum bei einer Kraftübertragung auftretenden Belastungen des Kraftübertragungselementes 15.

Wie in FIG. 2 angedeutet, ist der Sensorik 2 ferner eine (schematisch gezeigte) Auswerteeinrichtung 6 zugeordnet zum Ermitteln eines Gesamt-Lastwechsels und/oder einer Gesamt-Belastung des Kraftübertragungselementes 15 und zwar auf Grundlage der dokumentierten Belastungen.

Die Auswerteeinrichtung 6 ist ferner vorzugsweise ausgebildet eine, eine Wartung und/oder einen Austausch einer Komponente des Kraftübertragungselementes bzw. der Kupplungsanordnung betreffende Information in Abhängigkeit von dem ermittelten Gesamt-Lastwechsel und/oder der ermittelten Gesamt-Belastung auszugeben.

Die Erfindung ist nicht auf die in der Zeichnung gezeigte exemplarische Ausführungsform beschränkt, sondern ergibt sich aus einer Zusammenschau sämtlicher hierin offenbarter Merkmale.

Im Hinblick auf die Sensorik 2 ist es ferner denkbar, dass diese mindestens einen Beschleunigungssensor aufweist, um ein insbesondere charakteristisches Schwingungsspektrum des überwachten Kraftübertragungselementes 15 erfassen zu können. Dieses (charakteristische) Schwingungsspektrum wird vorzugsweise mit Hilfe des mindestens einen Beschleunigungssensors erfasst, wenn beispielsweise mit Hilfe eines Schwingungserzeugers eine Schwingung in dem Kraftübertragungselement 15 induziert wird.

Dabei ist es denkbar, dass die bereits genannte Auswerteeinrichtung 6 ausgebildet ist, um ein als Beschleunigungszeitsignal über eine vorab festgelegte oder festlegbare Zeitperiode mit Hilfe des Beschleunigungssensors aufgenommenes Schwingungsspektrum zu analysieren. Hierbei ist es denkbar, dass die Auswerteeinrichtung 6 ausgebildet ist, das aufgenommene Schwingungsspektrum mit einem vorab festgelegten oder festlegbaren Soll-Schwingungszentrum zu vergleichen und in Abhängigkeit von einem Grad der Abweichung eine entsprechende Meldung zu generieren und über eine Schnittstelle, insbesondere Remote-Control-Schnittstelle, auszugeben.

Das Soll-Schwingungsspektrum kann beispielsweise bei Inbetriebnahme des Kraftübertragungselementes bzw. bei Inbetriebnahme der Kupplungsanordnung im Zuge einer Lernprozedur aufgenommen werden.

Wie in FIG. 2 angedeutet, wird direkt an der zu überwachenden Kupplungsanordnung eine Sensorik befestigt, welche die relevanten Daten erfasst, ggf. vorverarbeitet, dauerhaft speichert und bei Bedarf die so erfassten Daten einem übergeordneten System zur Verfügung stellt.

Insbesondere werden von der Sensorik Umweltdaten, wie Temperatur, GPS-Positionsdaten, Geschwindigkeitsdaten, Beschleunigungs- und Verzögerungsdaten, Winkel- und Rotationsdaten, Positionsdaten einzelner Komponenten, wie Kuppelöse und Herzstück, Wege, wie z.B. Hübe und Körperschalldaten erfasst.

Innerhalb der Sensorik erfolgt vorzugsweise eine Vorverarbeitung der Daten mit dem Ziel, nur relevante Daten dauerhaft zu speichern, um den zur Verfügung stehenden Speicherplatz effizient nutzen zu können. Der Datenaustausch zum übergeordneten System kann über Funk, kontaktlos oder über eine drahtgebundene Datenverbindung erfolgen.

Bei dem der Kupplungsanordnung zugeordneten Überwachungssystem werden insbesondere die unterschiedlichen Betriebszustände des Kupplungskopfs (ungekuppelter Betriebszustand und gekuppelter Betriebszustand) sowie die Übergänge der Kupplungszustände berücksichtigt. Bei den unterschiedlichen Betriebszuständen und Kupplungszustandsübergängen können gemäß Realisierungen des erfindungsgemäßen Überwachungssystems folgende Fehler bzw. Anomalitäten identifiziert werden:
- Verändern der Eigenschwingung (Klappern etc.);
- Schwingen der Kupplungsstange mit dem Kupplungskopf;
- zu hohe Kuppelgeschwindigkeit;
- Crash;
- kein oder kein ordnungsgemäßes Kuppeln;
- kein oder kein zuverlässiges Entkuppeln;
- zu hohe Belastung im gekuppelten Fahrbetrieb; und
- Verschlechterung des Zustands der Komponenten der Kupplungsanordnung durch Umwelteinflüsse.

Daraus ergibt sich die nachfolgende Matrix:

| Zustände/Transitionen / Fehler | Zustand Ungekuppelt | Transition Kuppeln | Zustand Gekuppelt | Transition Entkuppeln |
|---|---|---|---|---|
| Verändern der Eigenschwingung (Klappern) | x | | x | |
| Schwingen der Kupplungsstange | x | | | |
| Zu hohe Kuppelgeschwindigkeit | | x | | |
| Crash | | x | x | |
| Kein oder kein zuverlässiges Kuppeln | | x | | |
| Kein oder kein zuverlässiges entkuppeln | | | | x |
| Zu hohe Belastungen im gekuppelten Fahrbetrieb | | | x | |
| Verschlechterung des Zustands der Komponenten durch Umwelteinflüsse. | x | | x | |

Der Fehler bzw. die Anomalität mit den Auswirkungen und der möglichen Detektionsmöglichkeit wird nachfolgend beschrieben:
Fehler: Verändern der Eigenschwingung
Folge: keine Funktion oder Fehlfunktion, ggf. Verlust des Systems,
Ursache: Lagerschaden, lose Befestigung, lose Verbindungen, angesprochenes Verformungsrohr
Messen: Beschleunigung, Gyroscope, Körperschall
Analyse: Filter, Events, FFT, GPS (Ort, Dauer, Zeit)
Fehler: Schwingen der Kupplungsstange
Folge: Beschädigen von Anbauteilen, keine oder Fehlfunktion der Kupplung
Ursache: Die Mittenstellung ist defekt, nicht richtig eingestellt oder falsch ausgelegt.
Messen: Beschleunigung, Gyroscope
Analyse: Filter, Events, GPS (Ort, Dauer, Zeit)
Fehler: Crash oder zu hohe Kupplungsgeschwindigkeit
Folge: Beschädigung der Kupplung, des Dämpfers oder auslösen des V-Rohrs
Ursache: Auffahrunfall, zu hohe Kuppelgeschwindigkeit, GPS (Ort, Dauer, Zeit) Messen: Beschleunigung, Gyroscope
Analyse: Filter, Events, FFT, GPS (Ort, Dauer, Zeit)
Fehler: Kein oder kein zuverlässiges Kuppeln
Folge: keine oder keine sichere Verbindung hergestellt
Ursache: Verschluss oder/und die EKU fährt nicht vor
Messen: Beschleunigung, Gyroscope, Körperschall (es kann erkannt werden, wenn der Verschluss betätigt wird und die EKU vorfährt!), GPS (Ort, Dauer, Zeit), Näherungsschalter
Analyse: Filter, Events, FFT, Auswertung der Näherungsschalter
Fehler: Kein oder kein zuverlässiges Entkuppeln
Folge: keine oder kein sicheres Entkuppeln. Abriss/Beschädigung von Elektrokontakten
Ursache: Verschluss oder/und die EKU fährt nicht zurück
Messen: Beschleunigung, Gyroscope, Körperschall (es kann erkannt werden, wenn der Verschluss betätigt wird und die EKU vorfährt!), GPS (Ort, Dauer, Zeit), Näherungsschalter
Analyse: Filter, Events, FFT, Auswertung der Näherungsschalter
Fehler: Zu hohe Belastungen im gekuppelten Fahrbetrieb
Ursache: Falsche Vorgaben, falsches Auslegen
Folge: Beschädigung des Dämpfers, Auslösen des V-Rohrs, Beschädigung der Kupplung.
Messen: Beschleunigung, Gyroscope, Körperschall, Temperatur und Feuchte, Näherungsschalter.
Analyse: Filter, Events, FFT, Auswertung der Näherungsschalter.
Fehler: Verschlechterung des Zustands der Komponenten durch Umwelteinflüsse.
Ursache: Falsche Vorgaben, falsches Auslegen
Folge: Beschädigung des Dämpfers, Auslösen des V-Rohrs, Beschädigung der Kupplung.
Messen: Temperatur und Feuchte, GPS
Analyse: Umweltbelastungen.

Demnach bleibt festzuhalten, dass den Kupplungszustandsübergängen und Kupplungszuständen unterschiedliche Fehler zugeordnet werden können, die mit unterschiedlichen Sensoren oder Sensorkombinationen erfasst werden.

Um ein Verändern der Eigenschwingung erkennen zu können, werden regelmäßig Messungen durchgeführt, gespeichert und miteinander verglichen. Wenn statistische Veränderungen erkannt werden, wird dieses entsprechend signalisiert. Dazu werden die Daten gefiltert und mit einer Fast-Fourier-Transformation (FFT) ausgewertet. Da es sich um keine scharfen abgrenzbaren Ergebnisse handelt, werden die Daten mit einer Fuzzy-Logik und/oder einem neuralen Netz bewertet.

Um das System trainieren zu können, werden Messungen durchgeführt. Die Ergebnisse der Messungen werden für das Training des neuralen Netzes verwendet.

Die Analyse der weiteren Fehler, wie Schwingen, Kuppeln mit zu hoher Geschwindigkeit, Crash, usw., erfolgt nach dem gleichen Schema. Mit anderen Worten, es finden Messungen unter zumindest ähnlichen Bedingungen statt. Diese werden aufgezeichnet und dienen zum Trainieren des Systems. Das Trainieren und Auswerten kann dabei sowohl innerhalb der Messumgebung online als auch offline erfolgen.

Die Erfindung ist nicht auf das in FIG. 1 und FIG. 2 gezeigte Ausführungsbeispiel beschränkt, sondern ergibt sich aus einer Zusammenschau sämtlicher hierin offenbarter Merkmale.

In einer besonders vorteilhaften, hier im einzelnen nicht dargestellten Ausbildung sind zumindest ein Teil der Erfassungseinrichtungen und die Speichereinrichtung vorrichtungsmäßig zentral in einer Messvorrichtung, insbesondere Box konzentriert, welche an der Kupplungsanordnung befestigbar, insbesondere befestigt ist. Gemäß einer besonders vorteilhaften Weiterbildung ist auch eine Auswerteinrichtung mit integriert. Die Messvorrichtung weist dann zumindest eine Kommunikationsschnittstelle zum Datenaustausch auf, ferner zur Kopplung mit externen Sensoren.

## Patentansprüche

1. Kupplungsanordnung für spurgeführte Fahrzeuge mit einem Kupplungskopf, welcher zur Änderung seines Kupplungszustands bedarfsweise mit einem Kupplungskopf einer Gegenkupplung kuppel- oder entkuppelbar ist, wobei der Kupplungsanordnung ein Überwachungssystem zugeordnet ist zur Zustandsüberwachung von Komponenten der Kupplungsanordnung auf Basis von Belastungsdaten von Komponenten der Kupplungsanordnung, wobei das Überwachungssystem ausgebildet ist, abhängig sowohl von einem Kupplungszustand der Kupplung als auch von einem Kupplungszustandsübergang der Kupplung unterschiedliche Belastungsdaten und/oder Belastungsdaten unterschiedlicher Komponenten der Kupplungsanordnung aufzunehmen, **dadurch gekennzeichnet, dass** das Überwachungssystem eine Sensorik (2) aufweist, welche ausgebildet ist, beim Übergang des Kupplungskopfs von seinem ungekuppelten Zustand in seinen gekuppelten Zustand mit Hilfe mindestens einer Schwingungs- und/oder Körperschallmessung insbesondere über eine vorab festgelegte oder festlegbare Zeitperiode einen Übergang von Komponenten der Kupplungsanordnung in ihren kuppelbereiten Zustand zu erfassen und über eine vorab festgelegte oder festlegbare Zeitperiode die Anzahl und Art der Kupplungszustandsänderungen des Kupplungskopfs aufzunehmen.

2. Kupplungsanordnung nach Anspruch 1,
wobei das Überwachungssystem eine Sensorik (2) aufweist, welche ausgebildet ist, im ungekuppelten Zustand des Kupplungskopfs:
(i) mit Hilfe mindestens einer Schwingungsmessung insbesondere über eine vorab festgelegte oder festlegbare Zeitperiode ein Schwingungsspektrum mindestens einer Komponente der Kupplungsanordnung als Beschleunigungszeitsignal aufzunehmen; und/oder
(ii) mit Hilfe mindestens einer Körperschallmessung insbesondere über eine vorab festgelegte oder festlegbare Zeitperiode ein Körperschallspektrum mindestens einer Komponente der Kupplungsanordnung als Amplituden-Frequenzgang aufzunehmen.

3. Kupplungsanordnung nach Anspruch 2,
wobei das Überwachungssystem eine Auswerteeinrichtung (6) aufweist zum Ableiten von kupplungsspezifischen Lastfaktoren anhand der mit der Sensorik (2) im ungekuppelten Zustand des Kupplungskopfes aufgenommenen Daten und/oder Informationen, wobei die Auswerteeinrichtung insbesondere ausgebildet ist:
- zum Analysieren des aufgenommenen Schwingungsspektrums aus dem aufgenommenen Schwingungsspektrum wenigstens ein Schwingungsmuster und/oder wenigstens eine Schwingungsamplitude zu extrahieren und das mindestens eine extrahierte Schwingungsmuster mit mindestens einem Bezugsmuster zu vergleichen und/oder die mindestens eine extrahierte Schwingungsamplitude mit mindestens einem Bezugswert zu vergleichen; und/oder
- zum Analysieren des aufgenommenen Amplituden-Frequenzgangs aus dem aufgenommenen Amplituden-Frequenzgang wenigstens eine Schwingungsfrequenz und/oder wenigstens eine Amplitude zu extrahieren und die mindestens eine extrahierte Schwingungsfrequenz mit mindestens einer Bezugsfrequenz zu vergleichen und/oder die mindestens eine extrahierte Amplitude mit mindestens einem Bezugswert zu vergleichen.

4. Kupplungsanordnung nach Anspruch 3,
wobei bei Inbetriebnahme, insbesondere bei einer erstmaligen Inbetriebnahme der Kupplungsanordnung, in einem Lernmodus mindestens ein charakteristisches Schwingungsprofil und/oder mindestens ein charakteristisches Körperschallprofil der Kupplungsanordnung bei ungekuppeltem Kupplungskopf aufgenommen werden/wird und anhand des im Lernmodus aufgenommenen Schwingungs- und/oder Körperschallprofils entsprechende Alarmschwellen festgelegt werden.

5. Kupplungsanordnung nach einem der Ansprüche 1 bis 4,
wobei das Überwachungssystem eine Sensorik (2) aufweist, welche ausgebildet ist, im gekuppelten Zustand des Kupplungskopfs:
(i) mit Hilfe mindestens einer Schwingungsmessung insbesondere über eine vorab festgelegte oder festlegbare Zeitperiode ein Schwingungsspektrum mindestens einer Komponente der Kupplungsanordnung als Beschleunigungszeitsignal aufzunehmen; und/oder
(ii) mit Hilfe mindestens einer Körperschallmessung insbesondere über eine vorab festgelegte oder festlegbare Zeitperiode ein Körperschallspektrum mindestens einer Komponente der Kupplungsanordnung als Amplituden-Frequenzgang aufzunehmen; und/oder
(iii) mit Hilfe mindestens einer Beschleunigungsmessung insbesondere über eine vorab festgelegte oder festlegbare Zeitperiode ein Akzelerogramm mindestens einer Komponente der Kupplungsanordnung aufzunehmen.

6. Kupplungsanordnung nach Anspruch 5,
wobei das Überwachungssystem eine Auswerteeinrichtung (6) aufweist zum Ableiten von kupplungsspezifischen Lastfaktoren anhand der mit der Sensorik (2) im gekuppelten Zustand des Kupplungskopfes aufgenommenen Daten und/oder Informationen, wobei die Auswerteeinrichtung (6) insbesondere ausgebildet ist:
- zum Analysieren des aufgenommenen Schwingungsspektrums aus dem aufgenommenen Schwingungsspektrum wenigstens ein Schwingungsmuster und/oder wenigstens eine Schwingungsamplitude zu extrahieren und das mindestens eine extrahierte Schwingungsmuster mit mindestens einem Bezugsmuster zu vergleichen und/oder die mindestens eine extrahierte Schwingungsamplitude mit mindestens einem Bezugswert zu vergleichen; und/oder
- zum Analysieren des aufgenommenen Amplituden-Frequenzgangs aus dem aufgenommenen Amplituden-Frequenzgang wenigstens eine Schwingungsfrequenz und/oder wenigstens eine Amplitude zu extrahieren und die mindestens eine extrahierte Schwingungsfrequenz mit mindestens einer Bezugsfrequenz zu vergleichen und/oder die mindestens eine extrahierte Amplitude mit mindestens einem Bezugswert zu vergleichen; und/oder
- zum Analysieren des aufgenommenen Akzelerogramms einen Lastwechsel abzuleiten und mit einem Bezugswert zu vergleichen.

7. Kupplungsanordnung nach Anspruch 6,
wobei bei Inbetriebnahme, insbesondere bei einer erstmaligen Inbetriebnahme der Kupplungsanordnung, in einem Lernmodus mindestens ein charakteristisches Schwingungsprofil und/oder mindestens ein charakteristisches Körperschallprofil der Kupplungsanordnung bei gekuppeltem Kupplungskopf aufgenommen werden/wird und anhand des im Lernmodus aufgenommenen Schwingungs- und/oder Körperschallprofils entsprechende Alarmschwellen festgelegt werden.

8. Kupplungsanordnung nach einem der Ansprüche 1 bis 7,
wobei das Überwachungssystem eine Sensorik (2) aufweist, welche ausgebildet ist, beim Übergang des Kupplungskopfs von seinem ungekuppelten Zustand in seinen gekuppelten Zustand:
(i) mit Hilfe mindestens einer Abstands- und/oder Näherungsmessung insbesondere über eine vorab festgelegte oder festlegbare Zeitperiode einen zeitlichen Verlauf des Kupplungsvorgangs aufzunehmen; und/oder
(ii) mit Hilfe mindestens einer Beschleunigungsmessung insbesondere über eine vorab festgelegte oder festlegbare Zeitperiode zumindest einen Teil der beim Kupplungsvorgang in die Kupplungsanordnung eingeleiteten Kräfte aufzunehmen.

9. Kupplungsanordnung nach einem der Ansprüche 1 bis 8,
wobei das Überwachungssystem eine Sensorik (2) aufweist, welche ausgebildet ist, beim Übergang des Kupplungskopfs von seinem gekuppelten Zustand in seinen ungekuppelten Zustand mit Hilfe mindestens einer Schwingungs- und/oder Körperschallmessung insbesondere über eine vorab festgelegte oder festlegbare Zeitperiode einen Übergang von Komponenten der Kupplungsanordnung in ihren ungekuppelten Zustand zu erfassen.

10. Kupplungsanordnung nach einem der Ansprüche 1 bis 9,
wobei das Überwachungssystem eine Sensorik (2) aufweist, welche ausgebildet ist:
- über eine vorab festgelegte oder festlegbare Zeitperiode die Zeitdauer aufzunehmen, während welcher der Kupplungskopf in seinem gekuppelten Zustand vorliegt; und/oder
- über eine vorab festgelegte oder festlegbare Zeitperiode die Zeitdauer aufzunehmen, während welcher der Kupplungskopf in seinem ungekuppelten Zustand vorliegt.

11. Kupplungsanordnung nach einem der Ansprüche 1 bis 10,
wobei das Überwachungssystem eine Sensorik (2) aufweist, welche ausgebildet ist, über eine vorab festgelegte oder festlegbare Zeitperiode äußere Umwelteinflüsse aufzunehmen, deren die Kupplungsanordnung ausgesetzt ist.

12. Kupplungsanordnung nach einem der Ansprüche 1 bis 11,
wobei dem Überwachungssystem oder der Sensorik (2) eine Speichereinrichtung (5) zugeordnet ist zum Speichern von insbesondere im Hinblick auf den Betrieb der Kupplungsanordnung relevanten Informationen und Daten, wobei die Speichereinrichtung (5) insbesondere ausgebildet ist, vorzugsweise alle mit der Sensorik (2) erfassten Daten und Informationen dauerhaft zu speichern, und wobei die Speichereinrichtung (5) ausgebildet ist, vorzugsweise über einen Fernzugriff zumindest teilweise auslesbar zu sein.

13. Kupplungsanordnung nach Anspruch 12,
wobei die Speichereinrichtung (5) ausgebildet ist zum Dokumentieren von insbesondere über einen vorab festgelegten oder festlegbaren Zeitraum auftretenden Belastungen von Komponenten der Kupplungsanordnung und/oder zum Dokumentieren von insbesondere über einen vorab festgelegten oder festlegbaren Zeitraum auftretenden Ereignissen insbesondere von Komponenten der Kupplungsanordnung.

14. Kupplungsanordnung nach Anspruch 13,
wobei eine Auswerteeinrichtung (6) vorgesehen ist zum Ermitteln eines Verschleißgrades, eines Gesamt-Lastwechsels und/oder einer Gesamt-Belastung von Komponenten der Kupplungsanordnung, und zwar auf Grundlage der dokumentierten Belastungen und auf Grundlage der dokumentierten Ereignisse, und zum Ausgeben einer eine Wartung und/oder einen Austausch einer Komponente betreffenden Information in Abhängigkeit von dem ermittelten Verschleißgrad, dem ermittelten Gesamt-Lastwechsel und/oder der ermittelten Gesamt-Belastung.

15. Verfahren zum Überwachen der Funktionsweise einer Kupplungsanordnung eines spurgeführten Fahrzeuges gemäß einem der Ansprüche 1 bis 14, wobei die Kupplungsanordnung einen Kupplungskopf aufweist, und wobei zum Überwachen der Funktionsfähigkeit der Kupplungsanordnung:
- im ungekuppelten Zustand des Kupplungskopfes mindestens ein Schwingungs- und/oder Körperschallspektrum der Kupplungsanordnung aufgenommen wird;
- im gekuppelten Zustand des Kupplungskopfes mindestens ein Schwingungs- und/oder Körperschallspektrum und vorzugsweise mindestens ein Akzelerogramm der Kupplungsanordnung aufgenommen werden; und
- beim Übergang des Kupplungskopfes von seinem ungekuppelten Zustand in seinen gekuppelten Zustand der zeitliche Verlauf des Kupplungsvorganges und der Lastwechsel aufgenommen werdenwobei nachfolgend genannte Größen an der Kupplungsanordnung erfasst werden:
- Beschleunigung der Kupplungsanordnung
- Rotation
- Winkel
- Temperatur
- Weg, insbesondere Hübe einzelner Komponenten der Kupplungsanordnung Position der Kuppelöse und des Herzstückes zur Beschreibung der Kupplungszustände.

## Claims

1. Coupling assembly for railbound vehicles having a coupling head, which can be coupled or decoupled as needed to/from a coupling head of a counter coupling to change its coupling state, wherein the coupling assembly is assigned a monitoring system for state monitoring of components of the coupling assembly on the basis of strain data of components of the coupling assembly, wherein the monitoring system is designed to record different strain data and/or strain data of different components of the coupling assembly in dependence on both a coupling state of the coupling and also a coupling state transition of the coupling, **characterized in that** the monitoring system has a sensor system (2), which is designed
upon the transition of the coupling head from its uncoupled state into its coupled state, with the aid of at least one vibration and/or structure-borne sound measurement, to acquire a transition of components of the coupling assembly into their coupling-ready state, in particular over a previously defined or definable period of time, and to record the number and type of the coupling state changes of the coupling head over a previously defined or definable period of time.

2. Coupling assembly according to Claim 1,
wherein the monitoring system has a sensor system (2), which is designed in the uncoupled state of the coupling head:
(i) with the aid of at least one vibration measurement, to record a vibration spectrum of at least one component of the coupling assembly as an acceleration time signal, in particular over a previously defined or definable period of time; and/or
(ii) with the aid of at least one structure-borne sound measurement, to record a structure-borne sound spectrum of at least one component of the coupling assembly as an amplitude-frequency response, in particular over a previously defined or definable period of time.

3. Coupling assembly according to Claim 2,
wherein the monitoring system has an evaluation device (6), for deriving coupling-specific load factors on the basis of the data and/or items of information recorded using the sensor system (2) in the uncoupled state of the coupling head, wherein the evaluation device is designed in particular:
- for analysing the recorded vibration spectrum, to extract at least one vibration pattern and/or at least one vibration amplitude from the recorded vibration spectrum and to compare the at least one extracted vibration pattern with at least one reference pattern and/or to compare the at least one extracted vibration amplitude with at least one reference value; and/or
- for analysing the recorded amplitude-frequency response, to extract at least one vibration frequency and/or at least one amplitude from the recorded amplitude-frequency response and to compare the at least one extracted vibration frequency with at least one reference frequency and/or to compare the at least one extracted amplitude with at least one reference value.

4. Coupling assembly according to Claim 3,
wherein upon startup, in particular upon an initial startup of the coupling assembly, in a learning mode, at least one characteristic vibration profile and/or at least one characteristic structure-borne sound profile of the coupling assembly are/is recorded with uncoupled coupling head and corresponding alarm thresholds are defined on the basis of the vibration and/or structure-borne sound profile recorded in the learning mode.

5. Coupling assembly according to any of Claims 1 to 4,
wherein the monitoring system has a sensor system (2), which is designed in the coupled state of the coupling head:
(i) with the aid of at least one vibration measurement, to record a vibration spectrum of at least one component of the coupling assembly as an acceleration time signal, in particular over a previously defined or definable period of time; and/or
(ii) with the aid of at least one structure-borne sound measurement, to record a structure-borne sound spectrum of at least one component of the coupling assembly as an amplitude-frequency response, in particular over a previously defined or definable period of time; and/or
(iii) with the aid of at least one acceleration measurement, to record an accelerogram of at least one component of the coupling assembly, in particular over a previously defined or definable period of time.

6. Coupling assembly according to Claim 5,
wherein the monitoring system has an evaluation device (6), for deriving coupling-specific load factors on the basis of the data and/or items of information recorded using the sensor system (2) in the coupled state of the coupling head, wherein the evaluation device (6) is designed in particular:
- for analysing the recorded vibration spectrum, to extract at least one vibration pattern and/or at least one vibration amplitude from the recorded vibration spectrum and to compare the at least one extracted vibration pattern with at least one reference pattern and/or to compare the at least one extracted vibration amplitude with at least one reference value; and/or
- for analysing the recorded amplitude-frequency response, to extract at least one vibration frequency and/or at least one amplitude from the recorded amplitude-frequency response and to compare the at least one extracted vibration frequency with at least one reference frequency and/or to compare the at least one extracted amplitude with at least one reference value; and/or
- for analysing the recorded accelerogram, to derive a load change and compare it with a reference value.

7. Coupling assembly according to Claim 6,
wherein upon startup, in particular upon an initial startup of the coupling assembly, in a learning mode, at least one characteristic vibration profile and/or at least one characteristic structure-borne sound profile of the coupling assembly are/is recorded with coupled coupling head and corresponding alarm thresholds are defined on the basis of the vibration and/or structure-borne sound profile recorded in the learning mode.

8. Coupling assembly according to any of Claims 1 to 7,
wherein the monitoring system has a sensor system (2), which is designed, upon the transition of the coupling head from its uncoupled state into its coupled state:
(i) with the aid of at least one distance and/or proximity measurement, to record a time curve of the coupling procedure, in particular over a previously defined or definable period of time; and/or
(ii) with the aid of at least one acceleration measurement, to record at least a portion of the forces introduced into the coupling assembly during the coupling procedure, in particular over a previously defined or definable period of time.

9. Coupling assembly according to any of Claims 1 to 8,
wherein the monitoring system has a sensor system (2), which is designed, upon the transition of the coupling head from its coupled state into its uncoupled state, with the aid of at least one vibration and/or structure-borne sound measurement, to acquire a transition of components of the coupling assembly into their uncoupled state, in particular over a previously defined or definable period of time.

10. Coupling assembly according to any of Claims 1 to 9,
wherein the monitoring system has a sensor system (2), which is designed:
- over a previously defined or definable period of time, to record the duration during which the coupling head is provided in its coupled state; and/or
- over a previously defined or definable period of time, to record the duration during which the coupling head is provided in its uncoupled state.

11. Coupling assembly according to any of Claims 1 to 10,
wherein the monitoring system has a sensor system (2), which is designed to record external environmental influences to which the coupling assembly is subjected, over a previously defined or definable period of time.

12. Coupling assembly according to any of Claims 1 to 11,
wherein the monitoring system or the sensor system (2) is assigned a storage device (5) for storing items of information and data relevant in particular with regard to the operation of the coupling assembly, wherein the storage device (5) is designed in particular to preferably permanently store all data and items of information acquired using the sensor system (2), and wherein the storage device (5) is designed to be at least partially readable, preferably via a remote access.

13. Coupling assembly according to Claim 12,
wherein the storage device (5) is designed to document strains of components of the coupling assembly occurring in particular over a previously defined or definable period of time and/or to document events, in particular of components of the coupling assembly, occurring in particular over a previously defined or definable period of time.

14. Coupling assembly according to Claim 13,
wherein an evaluation device (6) is provided for ascertaining a degree of wear, an overall load change, and/or an overall strain of components of the coupling assembly, specifically on the basis of the documented strains and on the basis of the documented events, and for outputting an item of information relating to a maintenance and/or an exchange of a component in dependence on the ascertained degree of wear, the ascertained overall load change, and/or the ascertained overall strain.

15. Method for monitoring the operating principle of a coupling assembly of a railbound vehicle according to any of Claims 1 to 14,
wherein the coupling assembly has a coupling head, and wherein to monitor the functionality of the coupling assembly:
- in the uncoupled state of the coupling head, at least one vibration and/or structure-borne sound spectrum of the coupling assembly is recorded;
- in the coupled state of the coupling head, at least one vibration and/or structure-borne sound spectrum and preferably at least one accelerogram of the coupling assembly are recorded; and
- upon the transition of the coupling head from its uncoupled state into its coupled state, the time curve of the coupling procedure and the load change are recorded, wherein variables mentioned hereafter are acquired on the coupling assembly:
- acceleration of the coupling assembly
- rotation
- angle
- temperature
- travel, in particular strokes of individual components of the coupling assembly, position of the coupling link and the hooked plate to describe the coupling states.

## Revendications

1. Ensemble d'attelage pour véhicules ferroviaires, comprenant une tête d'attelage, qui peut être accouplée ou désaccouplée à/à partir d'une tête d'attelage d'un contre-attelage afin de modifier son état de couplage en cas de besoin, un système de contrôle étant affecté à l'ensemble d'attelage pour la surveillance de l'état de composants de l'ensemble d'attelage sur la base de données de charge de composants de l'ensemble d'attelage, le système de contrôle étant conçu de façon à recevoir différentes données de charge et/ou des données de charge de différents composants de l'ensemble d'attelage, en fonction, à la fois, d'un état de couplage de l'attelage et d'un changement d'état de couplage de l'attelage, **caractérisé en ce que** le système de contrôle comporte un système de capteurs (2) qui est conçu pour,
lors du passage de la tête d'attelage de son état non accouplé à son état accouplé, à l'aide d'au moins une mesure de vibration et/ou de bruit structurel, en particulier sur une période de temps prédéfinie ou définissable, détecter un passage de composants de l'ensemble d'attelage à leur état prêt à l'accouplement et, sur une période de temps prédéfinie ou définissable, enregistrer le nombre et le type de changements d'état de couplage de la tête d'attelage.

2. Ensemble d'attelage selon la revendication 1,
dans lequel le système de contrôle comporte un système de capteurs (2) qui est conçu, dans l'état non accouplé de la tête d'attelage, pour :
(i) à l'aide d'au moins une mesure de vibration, en particulier sur une période de temps prédéfinie ou définissable, enregistrer un spectre de vibrations d'au moins un composant de l'ensemble d'attelage en tant que signal temporel d'accélération ; et/ou
(ii) à l'aide d'au moins une mesure de bruit structurel, en particulier sur une période de temps prédéfinie ou définissable, enregistrer un spectre de bruit structurel d'au moins un composant de l'ensemble d'attelage en tant que réponse amplitude-fréquence.

3. Ensemble d'attelage selon la revendication 2,
dans lequel le système de contrôle comporte une unité d'évaluation (6) destinée à déduire des facteurs de charge spécifiques à l'attelage sur la base des données et/ou des informations enregistrées par le système de capteurs (2) dans l'état non accouplé de la tête d'attelage, l'unité d'évaluation étant en particulier conçue pour :
- analyser le spectre de vibrations enregistré afin d'extraire du spectre de vibrations enregistré au moins un motif de vibration et/ou au moins une amplitude de vibration et comparer ledit au moins un motif de vibration extrait à au moins un motif de référence et/ou comparer ladite au moins une amplitude de vibration extraite à au moins une valeur de référence ; et/ou
- analyser la réponse amplitude-fréquence enregistrée afin d'extraire de la réponse amplitude-fréquence enregistrée au moins une fréquence de vibration et/ou au moins une amplitude et comparer ladite au moins une fréquence de vibration extraite à au moins une fréquence de référence et/ou comparer ladite au moins une amplitude extraite à au moins une valeur de référence.

4. Ensemble d'attelage selon la revendication 3,
dans lequel, lors de la mise en service, en particulier lors d'une première mise en service de l'ensemble d'attelage, au moins un profil de vibration caractéristique et/ou au moins un profil de bruit structurel caractéristique de l'ensemble d'attelage avec la tête d'attelage non accouplée est/sont enregistré(s) dans un mode d'apprentissage, et des seuils d'alarme correspondants sont définis sur la base du profil de vibration et/ou de bruit structurel enregistré dans le mode d'apprentissage.

5. Ensemble d'attelage selon l'une quelconque des revendications 1 à 4,
dans lequel le système de contrôle comporte un système de capteurs (2) qui est conçu, dans l'état accouplé de la tête d'attelage, pour :
(i) à l'aide d'au moins une mesure de vibration, en particulier sur une période de temps prédéfinie ou définissable, enregistrer un spectre de vibrations d'au moins un composant de l'ensemble d'attelage en tant que signal temporel d'accélération ; et/ou
(ii) à l'aide d'au moins une mesure de bruit structurel, en particulier sur une période de temps prédéfinie ou définissable, enregistrer un spectre de bruit structurel d'au moins un composant de l'ensemble d'attelage en tant que réponse amplitude-fréquence ; et/ou
(iii) à l'aide d'au moins une mesure d'accélération, en particulier sur une période de temps prédéfinie ou définissable, enregistrer un accélérogramme d'au moins un composant de l'ensemble d'attelage.

6. Ensemble d'attelage selon la revendication 5,
dans lequel le système de contrôle comporte une unité d'évaluation (6) destinée à déduire des facteurs de charge spécifiques à l'attelage sur la base des données et/ou des informations enregistrées par le système de capteurs (2) dans l'état accouplé de la tête d'attelage, l'unité d'évaluation (6) étant en particulier conçue pour :
- analyser le spectre de vibrations enregistré afin d'extraire du spectre de vibrations enregistré au moins un motif de vibration et/ou au moins une amplitude de vibration et comparer ledit au moins un motif de vibration extrait à au moins un motif de référence et/ou comparer ladite au moins une amplitude de vibration extraite à au moins une valeur de référence ; et/ou
- analyser la réponse amplitude-fréquence enregistrée afin d'extraire de la réponse amplitude-fréquence enregistrée au moins une fréquence de vibration et/ou au moins une amplitude et comparer ladite au moins une fréquence de vibration extraite à au moins une fréquence de référence et/ou comparer ladite au moins une amplitude extraite à au moins une valeur de référence ; et/ou
- analyser l'accélérogramme enregistré afin de déduire un changement de charge et de le comparer à une valeur de référence.

7. Ensemble d'attelage selon la revendication 6,
dans lequel, lors de la mise en service, en particulier lors d'une première mise en service de l'ensemble d'attelage, au moins un profil de vibration caractéristique et/ou au moins un profil de bruit structurel caractéristique de l'ensemble d'attelage avec la tête d'attelage accouplée est/sont enregistré(s) dans un mode d'apprentissage, et des seuils d'alarme correspondants sont définis sur la base du profil de vibration et/ou de bruit structurel enregistré dans le mode d'apprentissage.

8. Ensemble d'attelage selon l'une quelconque des revendications 1 à 7,
dans lequel le système de contrôle comporte un système de capteurs (2) qui est conçu pour, lors du passage de la tête d'attelage de son état non accouplé à son état accouplé :
(i) à l'aide d'au moins une mesure de distance et/ou de proximité, en particulier sur une période de temps prédéfinie ou définissable, enregistrer une évolution temporelle du processus d'accouplement ; et/ou
(ii) à l'aide d'au moins une mesure d'accélération, en particulier sur une période de temps prédéfinie ou définissable, enregistrer au moins une partie des forces introduites dans l'ensemble d'attelage lors du processus d'accouplement.

9. Ensemble d'attelage selon l'une quelconque des revendications 1 à 8,
dans lequel le système de contrôle comporte un système de capteurs (2) qui est conçu pour, lors du passage de la tête d'attelage de son état accouplé à son état non accouplé, à l'aide d'au moins une mesure de vibration et/ou de bruit structurel, en particulier sur une période de temps prédéfinie ou définissable, détecter un passage de composants de l'ensemble d'attelage à leur état non accouplé.

10. Ensemble d'attelage selon l'une quelconque des revendications 1 à 9,
dans lequel le système de contrôle comporte un système de capteurs (2) qui est conçu pour :
- enregistrer, sur une période de temps prédéfinie ou définissable, la durée pendant laquelle la tête d'attelage se trouve dans son état accouplé ; et/ou
- enregistrer, sur une période de temps prédéfinie ou définissable, la durée pendant laquelle la tête d'attelage se trouve dans son état non accouplé.

11. Ensemble d'attelage selon l'une quelconque des revendications 1 à 10,
dans lequel le système de contrôle comporte un système de capteurs (2) qui est conçu pour enregistrer, sur une période de temps prédéfinie ou définissable, les influences environnementales externes auxquelles l'ensemble d'attelage est exposé.

12. Ensemble d'attelage selon l'une quelconque des revendications 1 à 11,
dans lequel un dispositif de stockage (5) est associé au système de contrôle ou au système de capteurs (2) pour stocker des informations et des données particulièrement pertinentes en ce qui concerne le fonctionnement de l'ensemble d'attelage, ledit dispositif de stockage (5) étant en particulier conçu pour stocker en permanence, de préférence toutes les données et informations enregistrées par le système de capteurs (2), et ledit dispositif de stockage (5) étant conçu pour pouvoir être lu, de préférence au moins en partie par un accès à distance.

13. Ensemble d'attelage selon la revendication 12,
dans lequel le dispositif de stockage (5) est conçu pour documenter les charges subies par des composants de l'ensemble d'attelage, en particulier sur une période de temps prédéfinie ou définissable, et/ou pour documenter des événements survenant en particulier sur une période de temps prédéfinie ou définissable, en particulier sur des composants de l'ensemble d'attelage.

14. Ensemble d'attelage selon la revendication 13,
dans lequel il est prévu une unité d'évaluation (6) pour déterminer un degré d'usure, un changement de charge total et/ou une charge totale de composants de l'ensemble d'attelage, et ce, sur la base des charges documentées et sur la base des événements documentés, et pour délivrer une information concernant une maintenance et/ou un remplacement d'un composant en fonction du degré d'usure déterminé, du changement de charge total déterminé et/ou de la charge totale déterminée.

15. Procédé de surveillance du fonctionnement d'un ensemble d'attelage d'un véhicule ferroviaire selon l'une quelconque des revendications 1 à 14,
dans lequel l'ensemble d'attelage comporte une tête d'attelage, et dans lequel, pour surveiller la fonctionnalité de l'ensemble d'attelage :
- au moins un spectre de vibrations et/ou de bruit structurel de l'ensemble d'attelage est enregistré dans l'état non accouplé de la tête d'attelage ;
- au moins un spectre de vibrations et/ou de bruit structurel et de préférence au moins un accélérogramme de l'ensemble d'attelage sont enregistrés dans l'état accouplé de la tête d'attelage ; et
- lors du passage de la tête d'attelage de son état non accouplé à son état accouplé, l'évolution temporelle du processus d'accouplement et les changements de charge sont enregistrés, les grandeurs suivantes étant détectées sur l'ensemble d'attelage :
- accélération de l'ensemble d'attelage
- rotation
- angle
- température
- déplacement, en particulier les courses de composants individuels de l'ensemble d'attelage, la position de l'anneau d'attelage et de la pièce maîtresse pour décrire les états d'attelage.
